# EUROPEAN PATENT APPLICATION

(11) **EP 2 375 341 A1**
(43) Date of publication of application: **12.10.2011**
(21) Application number: 09837369.9
(22) Date of filing: 28.12.2009
(51) Int. Cl.: G06F 17/24, G06F 21/00

(54) **METHOD AND APPARATUS FOR CONTROLLING OPERATION OF DOCUMENT**

(30) Priority: 29.12.2008 CN 200810189138
(71) Applicant: Chengdu Huawei Symantec Technologies Co., Ltd., Sichuan 611731 (CN)
(72) Inventor: YU, Jian, Sichuan 611731 (CN)
(74) Representative: Pfenning, Meinig & Partner GbR
(86) International application number: PCT/CN2009/076125
(87) International publication number: WO 2010/078812

(57) **Abstract**

A method for controlling operations on a document includes: intercepting a copy operation, copying data on a clipboard, and saving the data into a memory space of a process of a current controlled document, and setting content of the clipboard to empty information; and intercepting a paste operation, and pasting the data in the memory space into the current controlled document through the paste operation if determining that the paste operation meets preset rights.

## Description

This application claims priority to Chinese Patent Application No. 200810189138.5, filed with the Chinese Patent Office on December 29, 2008 and entitled "METHOD AND APPARATUS FOR CONTROLLING OPERATION ON DOCUMENT", which is hereby incorporated by reference in its entirety.

### FIELD OF THE INVENTION

The present invention relates to data security technologies, and in particular, to a method and a terminal device for controlling operations on a document.

### BACKGROUND OF THE INVENTION

With development of networks, network security is more and more important. People tend to attach importance to prevent attacks from the outside, and spare no effort or money to deploy security products, such as firewalls and Intrusion Detection System (IDS) at the network edge. However, security problems caused by illegal operations inside the network are not negligible at all, for example, document disclosure. If a user accesses an extranet through an intranet without permission, information security is challenged, and important data is vulnerable to disclosure, which makes the enterprise suffer heavy loss.

In the prior art, document encryption software is generally made as plug-ins of documents such as WORD and PDF, and the plug-in is loaded when the document is started. The loaded plug-ins are designed to: (1) control menus of the document, grey the Copy and Paste menu items and the corresponding buttons to prevent copy and paste operations; (2) forbid shortcut operations such as Ctrl+C, Ctrl+V, and Ctrl+X; and (3) control copy and paste operations according to rights, for example, a rewritable document allows a user to copy all content of the document, a read-only document allows no copy operation, and a read-only copyable document allows a user to copy the content of the document into a current controlled document.

The prior art has at least the following disadvantages: The prior art allows the user to copy the content into a controlled document but does not allow the user to copy and paste content in the controlled document, which brings inconvenience to the user.

### SUMMARY OF THE INVENTION

The embodiments of the present invention provide a method and a terminal device for controlling operations on a document to improve document security and user experience.

The embodiments of the present invention are implemented through the following technical solution:
An embodiment of the present invention provides a method for controlling operations on a document. The method includes:
   intercepting a copy operation, copying data on a clipboard and saving the data into a memory space of a process of a current controlled document, and setting content of the clipboard to empty information; and
   intercepting a paste operation, and pasting the data in the memory space into the current controlled document through the paste operation if determining that the paste operation meets preset rights.

An embodiment of the present invention provides another method for controlling operations on a document. The method includes:
intercepting a copy operation, copying data on a clipboard, and saving the data into a memory space of a process of a current controlled document, where the data on the clipboard is content in the current controlled document; and
intercepting a paste operation, and pasting the data in the memory space of the process of the current controlled document into a target controlled document according to a context of the paste operation if determining that the paste operation meets preset rights.

An embodiment of the present invention provides a terminal device. The terminal device includes:
a copying unit, adapted to intercept a copy operation, copy data on a clipboard and save the data into a memory space of a process of a current controlled document;
a setting unit, adapted to set content of the clipboard to empty information;
a judging unit, adapted to intercept a paste operation, and judge rights for the paste operation to obtain a judgment result; and
a pasting unit, adapted to paste the data in the memory space into the current controlled document through the paste operation if the judging unit determines that the paste operation meets preset rights.

An embodiment of the present invention provides another terminal device. The terminal device includes:
a copying unit, adapted to intercept a copy operation, copy data on a clipboard, and save the data into a memory space of a process of a current controlled document, where the data on the clipboard is content in the current controlled document;
a judging unit, adapted to intercept a paste operation, and judge rights for the paste operation to obtain a judgment result; and
a pasting unit, adapted to: intercept a paste operation, and paste the data in the memory space of the process of the current controlled document into a target controlled document according to a context of the paste operation if the judging unit determines that the paste operation meets preset rights.

The foregoing technical solution brings at least the following benefits: The data on the clipboard is stored into the memory space of the process of the current controlled document, and the content of the clipboard is set to empty information; therefore, when the paste operation meets preset rights, the data in the memory space of the current process is pasted into the current controlled document through a paste operation. In this way, copy and paste are enabled within the controlled document, and the user experience is improved.

### BRIEF DESCRIPTION OF THE DRAWINGS

FIG 1 is a flow chart of a method for controlling operations on a document according to Embodiment 1 of the present invention;
FIG. 2A is a flow chart of a method for controlling operations on a document according to Embodiment 2 of the present invention;
FIG. 2B is a flow chart of a method for controlling operations on a document according to another embodiment of the present invention;
FIG. 3A shows a schematic diagram of a terminal device according to Embodiment 3 of the present invention;
FIG. 3B shows a schematic diagram of another terminal device according to Embodiment 3 of the present invention;
FIG. 3C shows a schematic diagram of another terminal device according to Embodiment 3 of the present invention;
FIG. 4 shows a schematic diagram of a terminal device according to Embodiment 4 of the present invention; and
FIG 5 shows a schematic diagram of a terminal device according to Embodiment 5 of the present invention.

### DETAILED DESCRIPTION OF THE EMBODIMENTS

The technical solution of the present invention is described in detail below with reference to the accompanying drawings. Evidently, the drawings and the detailed description are merely representative of particular embodiments of the present invention rather than all embodiments. All other embodiments, which can be derived by those skilled in the art from the embodiments given herein without any creative effort, shall fall within the protection scope of the present invention.

### Embodiment 1

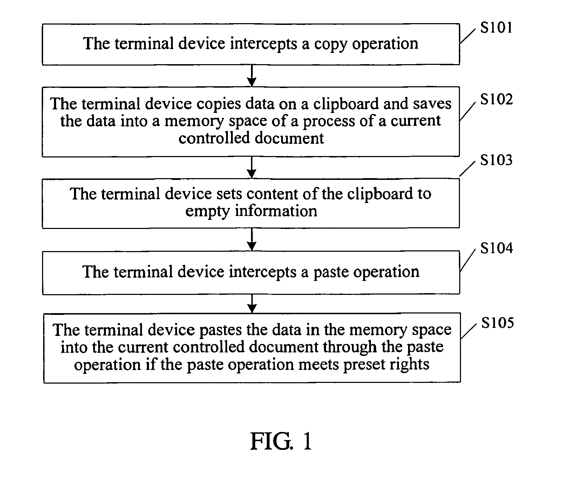

FIG 1 is a flow chart of a method for controlling operations on a document according to Embodiment 1 of the present invention. The method includes the following steps:
S101. Intercept a copy operation.
S102. Copy data on a clipboard and save the data into a memory space of a process of a current controlled document.
S103. Set content of the clipboard to empty information.

Specifically, replace data on the clipboard with spaces, or delete the data on the clipboard.
S 104. Intercept a paste operation.
S105. Paste the data in the memory space into the current controlled document through the paste operation if the paste operation meets preset rights.

This embodiment brings the following merits: Copy and paste operations in a controlled document can be controlled according to rights, and the data on the clipboard is set to empty information, and therefore, the user is unable to paste contents to the outside but can copy and paste within the controlled document, which improves the user experience.

### Embodiment 2

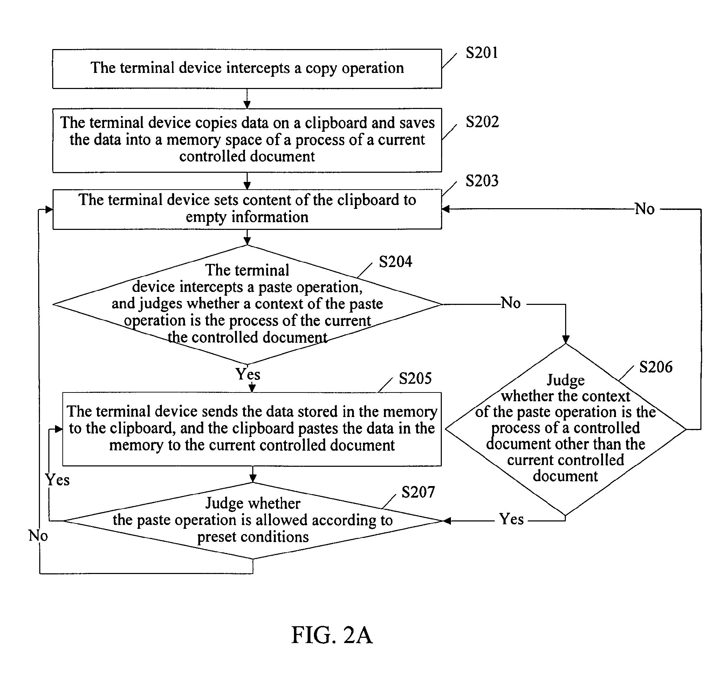

FIG 2A is a flow chart of a method for controlling operations on a document according to Embodiment 2 of the present invention. The method includes the following steps:
S201. The terminal device intercepts a copy operation.

In practice, document encryption software needs to be installed on the terminal first. After the document encryption software is installed, a "create encrypted file" menu item will appear in the shortcut menu on the desktop. The user moves the cursor onto the document that needs protection, for example, onto xx.doc, and then chooses "create encrypted file" from the shortcut menu. After being encrypted, xx.doc changes to xx.dsm. File association is performed in the operating system at the time of installing the document encryption software. Therefore, when the user opens an encrypted file such as xx.dsm, the document encryption software is started. The document encryption software registers a global hook of the operating system window, hooks the copy-related functions, such as Set Clipboard Data and Get Clipboard Data, in the operating system window, and filters all copy operations.

S202. The terminal device copies data on a clipboard and saves the data into a memory space of a process of a current controlled document.

The memory space of a general process is 2 GB.

S203. The terminal device sets content of the clipboard to empty information.

Specifically, the terminal device replaces data on the clipboard with spaces, or deletes the data on the clipboard.

S204. The terminal device intercepts a paste operation, and judges whether a context of the paste operation is the process of the current controlled document. If the context of the paste operation is the process of the current controlled document, the procedure proceeds to S205; if the context of the paste operation is not the process of the current controlled document, the procedure proceeds to S206.

The context of the paste operation is the target document of the paste operation.

For example, in a protected WORD document, the user copies selected content "aa" in the document by right-clicking and choosing Copy from the shortcut menu or pressing Ctrl+C, and then pastes the content into another opened document such as TXT, WORD, or email box. In this case, the document such as TXT, WORD, or email box is the target document of the paste operation.

S205. Through the paste operation, the terminal device pastes the data in the memory space of the current process into the current controlled document.

For example, a SetClipboardData(UINT uFormat, Handle hMem) function of the operating system window is invoked to assign a value to a Handle hMem parameter of this function, and therefore, the memory address pointed to by the function is the address of the data stored in the memory space of the process of the current controlled document. In this way, the data is pasted into the current controlled document.

S206. The terminal device further judges whether the context of the paste operation is the process of another controlled document other than the current controlled document. If the context of the paste operation is the process of another controlled document other than the current controlled document, the procedure proceeds to S207; the context of the paste operation is not the process of another controlled document other than the current controlled document, the procedure proceeds to S203.

S207. The terminal device judges whether the paste operation is allowed according to preset conditions. If the paste operation is allowed, the procedure proceeds to S205; if the paste operation is not allowed, the procedure proceeds to S203.

The preset conditions are set as required. For example, it is set that the aa.dsm document is entitled to accept content copied and pasted from the cc.dsm document.

In this embodiment, for a Microsoft Office document, PDF document, CAD document, and picture, the user is allowed to copy and paste content within the process of the document, but the user is not allowed to paste the content to the outside. For example, in a protected WORD document, if the user copies selected content "aa" in the document by right-clicking and choosing Copy from the shortcut menu or pressing "Ctrl+C", and then pastes the content into another opened document such as TXT, WORD, or email box, the paste operation fails; if the user pastes the content inside the protected WORD file, the content "aa" is pasted successfully.

In this embodiment, the clipboard always bears only one copy of data so that the normal copy and paste operations on the operating system are not affected, and no operation trace is seen in the Office clipboard because the Office clipboard is based on the Windows clipboard.

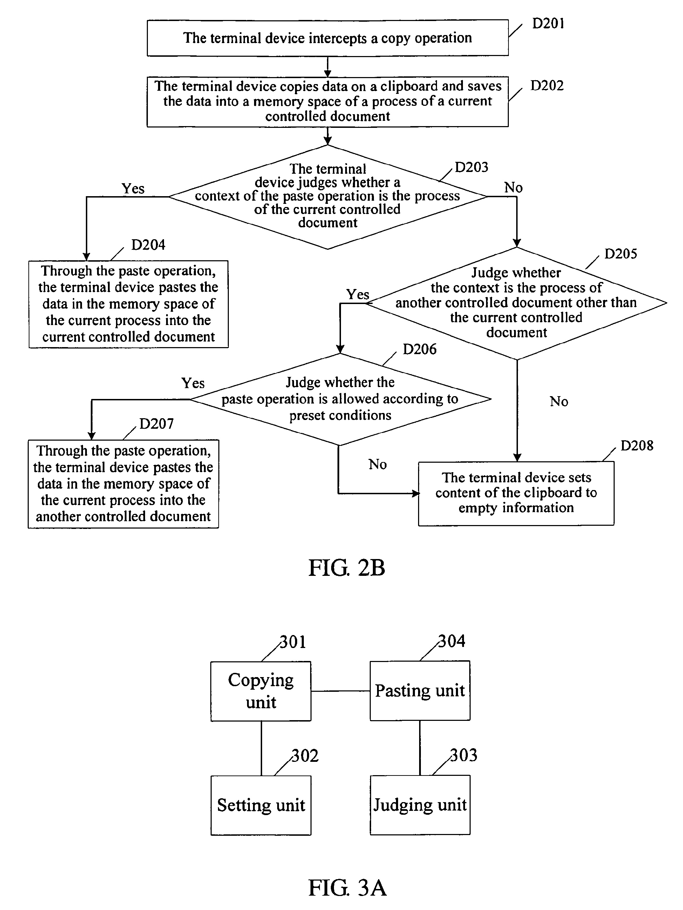

FIG. 2B is a flow chart of a method for controlling operations on a document in another embodiment of the present invention. The method includes the following steps:
D201. The terminal device intercepts a copy operation.

In practice, document encryption software needs to be installed on the terminal first. After the document encryption software is installed, a "create encrypted file" menu item will appear in the shortcut menu on the desktop. The user moves the cursor onto the document that needs protection, for example, onto xx.doc, and then chooses "create encrypted file" from the shortcut menu. After being encrypted, xx.doc changes to xx.dsm. File association is performed in the operating system at the time of installing the document encryption software. Therefore, when the user opens an encrypted file such as xx.dsm, the document encryption software is started. The document encryption software registers a global hook of the operating system window, hooks the copy-related functions, such as Set Clipboard Data and Get Clipboard Data, in the operating system window, and filters all copy operations.

D202. The terminal device copies data on a clipboard and saves the data into a memory space of a process of a current controlled document. The data on a clipboard is content in the current controlled document.

D203. The terminal device intercepts a paste operation, and judges whether a context of the paste operation is the process of the current controlled document. If the context of the paste operation is the process of the current controlled document, the procedure proceeds to D204; if the context of the paste operation is not the process of the current controlled document, the procedure proceeds to D205.

The context of the paste operation is the target document of the paste operation.

For example, in a protected WORD document, the user copies selected content "aa" in the document by right-clicking and choosing Copy from the shortcut menu or pressing Ctrl+C, and then pastes the content into another opened document such as TXT, WORD, or email box. In this case, the document such as TXT, WORD, or email box is the target document of the paste operation.

D204. Through the paste operation, the terminal device pastes the data in the memory space of the process of the current controlled document into the current controlled document.

For example, a SetClipboardData(UINT uFormat, Handle hMem) function of the operating system window is invoked to assign a value to a Handle hMem parameter of this function, and therefore, the memory address pointed to by the function is the address of the data stored in the memory space of the process of the current controlled document. In this way, the data is pasted into the current controlled document.

D205. The terminal device further judges whether the context of the paste operation is the process of another controlled document other than the current controlled document. If the context of the paste operation is the process of another controlled document other than the current controlled document, the procedure proceeds to D206; if the context of the paste operation is not the process of another controlled document other than the current controlled document, the procedure proceeds to D208.

D206. The terminal device judges whether the paste operation is allowed according to preset conditions. If the paste operation is allowed, the procedure proceeds to D207; if the paste operation is not allowed, the procedure proceeds to D208. The preset conditions indicate whether the another controlled document is entitled to accept content copied and pasted from the current controlled document.

D207. Through the paste operation, the terminal device pastes the data in the memory space of the process of the current controlled document into the another controlled document. The procedure ends.

D208. The terminal device sets content of the clipboard to empty information.

This step is equivalent to controlling the content of the clipboard to be empty.

Specifically, the terminal device replaces data on the clipboard with spaces, or deletes the data on the clipboard.

An example is given below:
Document encryption software is installed to encrypt an AA.doc document. After being encrypted, the AA.doc document changes to an AA.dsm document. File association is performed in the operating system in the process of installing the document encryption software. Therefore, the document encryption software is started when the user opens the AA.dsm document. When the user selects and copies content in the current controlled document (AA.dsm), the copy operation is intercepted by the document encryption software. The document encryption software replaces the clipboard content with the content in the controlled document, copies clipboard content after replacement, and saves the clipboard content after replacement into the memory space of the process of the current controlled document. When the context of the paste operation is another controlled document such as CC.dsm, if the preset condition indicates that the CC.dsm document is entitled to accept content copied and pasted from the AA.dsm document, the software determines that the paste operation is allowed according to the preset condition, and pastes the data in the memory space of the process of the current controlled document (namely, content in the AA.dsm) into the CC.dsm file.

This embodiment brings the following merits: Copy and paste operations in a controlled document can be controlled according to rights; for the paste operation that does not meet the preset rights, the data on the clipboard is set to spaces so that the content is never pasted to the outside.

### Embodiment 3

In contrast to Embodiment 1, the method in this embodiment may further include the following additional steps after S202:
The document encryption software of the terminal encrypts the data stored in the memory space of the process of the current controlled document so that the memory is protected.

Accordingly, before S205, the method further includes:
The document encryption software decrypts the data stored in the memory space of the process of the current controlled document.

Compared with Embodiment 1 or Embodiment 2, this embodiment brings the following merits: In the case that a third-party crack program intrudes into the process of the controlled document, the content obtained by the cracking program is encrypted and unidentifiable. In this way, the data of the controlled document is protected against disclosure.

The method for controlling operations on a document in this embodiment of the present invention is described based on specific scenarios.

Scenario 1: A user opens a controlled document and copies content in the document to an uncontrolled document. The clipboard content is empty and the user fails in the copy operation.

The implementation mode based on scenario 1 is detailed as below: Document encryption software is installed to encrypt an aa.doc document. After being encrypted, the aa.doc document changes to an aa.dsm document. File association is performed in the operating system in the process of installing the document encryption software. Therefore, the document encryption software is started when the user opens the aa.dsm document. When the user selects and copies content in the protected document, the copy operation is intercepted by the document encryption software. The document encryption software replaces the clipboard content with the content in the protected document, copies clipboard content after replacement, and saves the clipboard content after replacement into the memory space of the process of the current controlled document. When the user pastes the content into other documents such as xx.txt or xx.doc, the document encryption software intercepts the paste operation. Through filtering, the document encryption software determines that the context is an uncontrolled document process. Therefore, the software does not transfer data, and no content is pasted into the uncontrolled document.

Scenario 2: A user opens a controlled WORD document and copies content in the document to the current controlled document. The copy and paste operations are performed normally.

The implementation mode based on scenario 2 is detailed as below: Document encryption software is installed to encrypt an aa.doc document. After being encrypted, the aa.doc document changes to an aa.dsm document. File association is performed in the operating system in the process of installing the document encryption software. Therefore, the document encryption software is started when the user opens the aa.dsm document. When the user selects and copies content in the protected document (aa.dsm), the copy operation is intercepted by the document encryption software. The document encryption software replaces the clipboard content with the content in the protected document, copies clipboard content after replacement, and saves the clipboard content after replacement into the memory space of the process of the current controlled document. When the user pastes the content into the current controlled document, the document encryption software intercepts the paste operation. Through filtering, the document encryption software determines that the context is the process of the current controlled document. Therefore, the software decrypts and transfers the data correctly, and the content is pasted into the current controlled document.

Scenario 3: A user opens a controlled WORD document and copies content in the document to another controlled document. Conditions are preset as a basis for judging whether copy and paste operations are allowed. The preset conditions are set as required. For example, it is set that the aa.dsm document is entitled to accept content copied and pasted from the cc.dsm document.

The implementation mode based on scenario 3 is detailed as below: Document encryption software is installed to encrypt an aa.doc document. After being encrypted, the aa.doc document changes to an aa.dsm document. File association is performed in the operating system in the process of installing the document encryption software. Therefore, the document encryption software is started when the user opens the aa.dsm document. When the user selects and copies content in the protected document (aa.dsm), the copy operation is intercepted by the document encryption software. The document encryption software replaces the clipboard content with the content in the protected document, copies clipboard content after replacement, and saves the clipboard content after replacement into the memory space of the process of the current controlled document. When the user pastes the content into another controlled document such as bb.dsm, the document encryption software intercepts the paste operation. Through filtering, the document encryption software determines that the another controlled document is not an aa.dsm document. Therefore, the software does not transfer data, and no content is pasted into the another controlled document.

Scenario 4: A third-party cracking program intrudes into the process of the current controlled document, and copies content in this document. The content obtained by the third-party cracking program is encrypted and unidentifiable, which prevents disclosure of the data in the current controlled document.

The implementation mode based on scenario 4 is detailed as below: Document encryption software is installed to encrypt an aa.doc document. After being encrypted, the aa.doc document changes to an aa.dsm document. File association is performed in the operating system in the process of installing the document encryption software. Therefore, the document encryption software is started when the user opens the aa.dsm document. When the user selects and copies content in the protected document (aa.dsm), the copy operation is intercepted by the document encryption software. The document encryption software replaces the clipboard content, and saves clipboard content after replacement into the memory space of the process of the current controlled document and encrypts the content. A Trojan program intrudes into the process of the current controlled document to perform forced search in the memory. Because the content that the Trojan program attempts to copy is encrypted, the Trojan program fails to obtain the content, which prevents disclosure of the content in the current controlled document.

The method for controlling operations on a document is described above, and the following describes a terminal device provided in an embodiment of the present invention.

### Embodiment 4

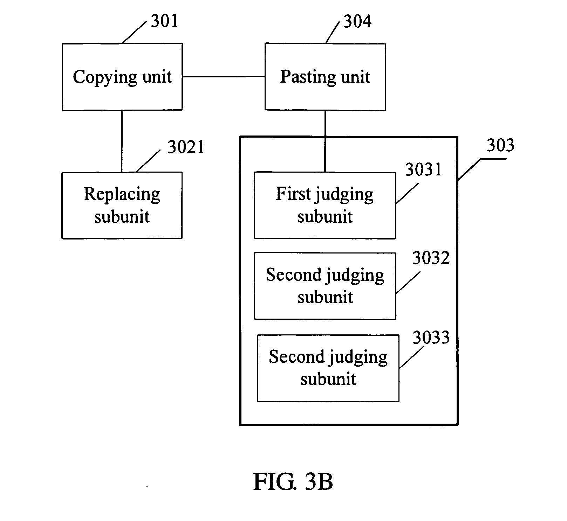

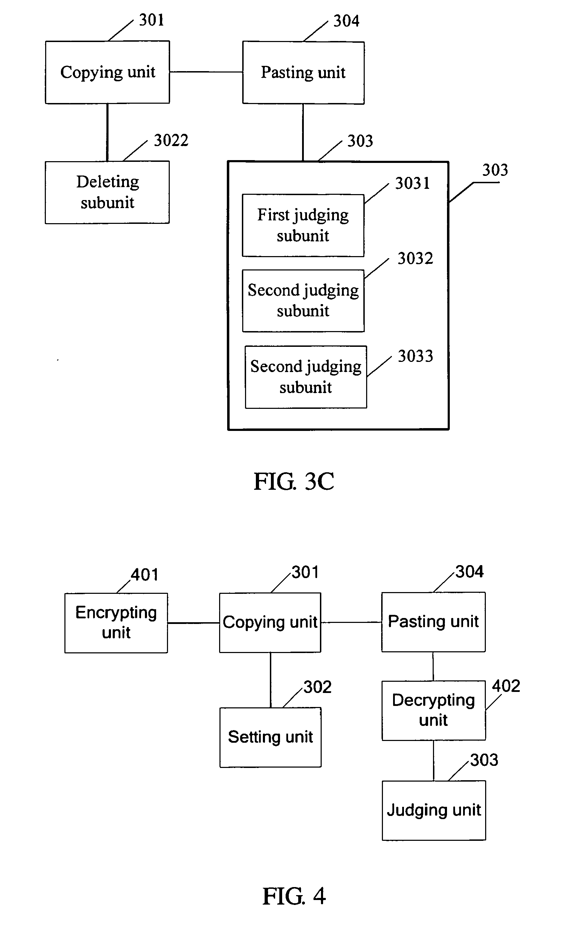

FIG. 3A, FIG. 3B, and FIG. 3C show a terminal device according to Embodiment 4 of the present invention. The terminal device includes a copying unit 301, a setting unit302, a judging unit 303, and a pasting unit 304.

The copying unit 301 is adapted to intercept a copy operation, copy data on a clipboard, and save the data into a memory space of a process of a current controlled document.

For example, the user selects "create encrypted file" to encrypt the document. After being encrypted, an xx.doc document changes to an xx.dsm document. File association is performed in the operating systems at the time of installing the document encryption software. Therefore, when the user opens an encrypted document such as xx.dsm, the copying unit 301 is started. The copying unit 301 registers a global hook of the operating system window, hooks the copy-related functions, such as Set Clipboard Data and Get Clipboard Data, in the operating system window, and filters and intercepts copy operations.

The setting unit 302 is adapted to set the data on the clipboard to empty information after the copying unit 301 copies and saves the data on the clipboard into the memory space of the process of the current controlled document.

The judging unit 303 is adapted to intercept a paste operation, and judge rights for the paste operation to obtain a judgment result.

The pasting unit 304 is adapted to paste the data in the memory space into the current controlled document through the paste operation if the judging unit 303 determines that the paste operation meets preset rights, where the data is stored by the copying unit 301 into the memory space of the current process. For example, the pasting unit 304 invokes a SetClipboardData(UINT uFormat, Handle hMem) function of the operating system window to assign a value to a Handle hMem parameter of this function, and therefore, the memory address pointed to by the function is the address of the data stored in the memory space of the process of the current controlled document. In this way, the data is pasted into the current controlled document. However, for the paste operation that does not meet the preset rights, the data on the clipboard is still set to empty information.

As shown in FIG 3B, the setting unit 302 includes:
a replacing subunit 3021, adapted to replace the data on the clipboard with spaces after the copying unit 301 copies and saves the data on the clipboard into the memory space of the process of the current controlled document.

As shown in FIG. 3C, the setting unit 302 includes:
a deleting subunit 3022, adapted to delete the data on the clipboard after the copying unit 301 copies and saves the data on the clipboard into the memory space of the process of the current controlled document.

The judging unit 303 includes:
a first judging subunit 3031, adapted to determine that the paste operation meets the preset rights if determining that the context of the paste operation is the process of the current controlled document. In this case, the paste operation is allowed in the current controlled document.

The judging unit 303 includes:
a second judging subunit 3032, adapted to determine that the paste operation does not meet the preset rights if determining that the context of the paste operation is the process of an uncontrolled document.

The judging unit 303 includes:
a third judging subunit 3033, adapted to judge whether the paste operation is allowed according to preset conditions if determining that the context of the paste operation is a process of another controlled document other than the current controlled document, and determine that the paste operation meets the preset rights if the paste operation is allowed, or determine that the paste operation does not meet the preset rights if the paste operation is not allowed.

This embodiment brings the following merits: Copy and paste operations in a controlled document can be controlled according to rights; for the paste operation that does not meet the preset rights, the data on the clipboard is still set to spaces so that the content is never pasted to the outside.

### Embodiment 5

FIG. 4 shows a schematic diagram of a terminal device according to Embodiment 5 of the present invention. Compared with the terminal device provided in Embodiment 3, the terminal device provided in this embodiment further includes:
an encrypting unit 401, adapted to encrypt the data stored by the copying unit 401 in the memory space of the process of the current controlled document so that the memory is protected; and
a decrypting unit 402, adapted to decrypt the data stored in the memory space of the current process if the judging unit 303 determines that the paste operation meets preset rights.

Compared with the terminal device provided in Embodiment 4, the terminal device provided in Embodiment 5 brings the following merits: In the case that a third-party crack program intrudes into the controlled document process, the content obtained by the cracking program is encrypted and unidentifiable. In this way, the data of the controlled document is protected against disclosure.

### Embodiment 6

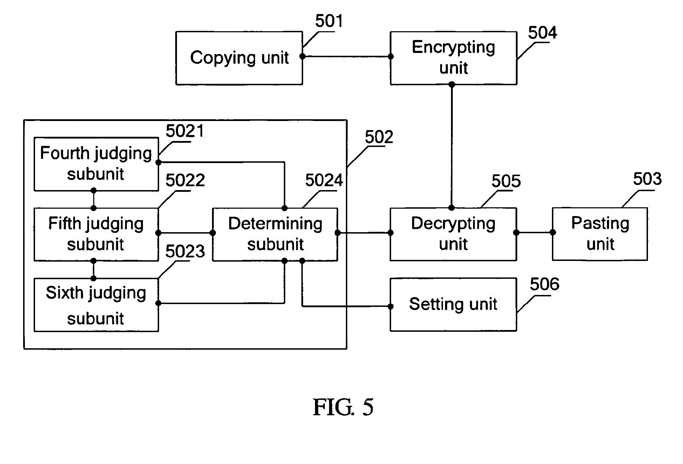

FIG. 5 shows a schematic diagram of a terminal device according to Embodiment 6 of the present invention. The terminal device includes:
a copying unit 501, adapted to intercept a copy operation, copy data on a clipboard and save the data into a memory space of a process of a current controlled document, where the data on the clipboard is content in the current controlled document;
a judging unit 502, adapted to intercept a paste operation, and judge rights for the paste operation to obtain a judgment result; and
a pasting unit 503, adapted to: intercept a paste operation, and paste the data in the memory space of the process of the current controlled document into a target controlled document according to a context of the paste operation if the judging unit 502 determines that the paste operation meets preset rights.

Specifically, the judging unit 502 includes:
a fourth judging subunit 5021, adapted to judge whether the context of the paste operation is the process of the current controlled document;
a fifth judging subunit 5022, adapted to judge whether the context of the paste operation is a process of another controlled document other than the current controlled document if the fourth judging subunit 5021 determines that the context of the paste operation is not the process of the current controlled document;
a sixth judging subunit 5023, adapted to judge whether the paste operation is allowed according to preset conditions if the fifth judging subunit 5022 determines that the context of the paste operation is the process of another controlled document other than the current controlled document; and
a determining subunit 5024, adapted to: determine that the paste operation meets preset rights if the context of the paste operation is the process of the current controlled document or if the context of the paste operation is a process of another controlled document which allows paste operations other than the current controlled document; and determine that the paste operation does not meet the preset rights if the context of the paste operation is neither the process of the current controlled document nor the process of another controlled document which allows paste operations other than the current controlled document.

The pasting unit 503 is adapted to: paste the data in the memory space of the process of the current controlled document into the current controlled document if the determining subunit 5024 determines that the paste operation meets the preset rights and that the context of the paste operation is the process of the current controlled document; and paste the data in the memory space of the process of the current controlled document into the another controlled document if the determining subunit 5024 determines that the paste operation meets the preset rights and that the context of the paste operation is the process of the another controlled document which allows paste operations other than the current controlled document.

The device further includes:
an encrypting unit 504, adapted to encrypt the data stored in the memory space; and
a decrypting unit 505, adapted to decrypt the data stored in the memory space if the judging unit 502 determines that the paste operation meets the preset rights.

The pasting unit 503 is adapted to paste the decrypted data in the memory space into a target controlled document through the paste operation according to the context of the paste operation if the judging unit 502 determines that the paste operation meets the preset rights.

The setting unit 504 is adapted to set the content on the clipboard to empty information. Specifically, the setting unit 504 is adapted to set the content on the clipboard to empty information if the determining subunit 5024 determines that the paste operation does not meet the preset rights.

The foregoing embodiments bring the following merits: Copy and paste operations of users can be controlled, and copy and paste are allowed within a controlled document; copy and paste from one controlled document to another controlled document are controlled; and copy and paste between a controlled document and an uncontrolled document are controlled. This facilitates users to perform copy and paste operations in the current controlled document, and ensures document security

Persons of ordinary skill in the art understand that all or part of the steps of the method in the embodiments of the present invention may be implemented by a program instructing relevant hardware. The program may be stored in computer readable storage media.

The storage media may be a magnetic disk, Compact Disk-Read Only Memory (CD-ROM), Read-Only Memory (ROM), or Random Access Memory (RAM).

The embodiments of the present invention are expounded above. Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the appended claims.

## Claims

1. A method for controlling operations on a document, comprising:
intercepting a copy operation, copying data on a clipboard, and saving the data into a memory space of a process of a current controlled document, and setting content of the clipboard to empty information; and
intercepting a paste operation, and pasting the data in the memory space into the current controlled document through the paste operation if determining that the paste operation meets preset rights.

2. The method according to claim 1, wherein the setting of the content of the clipboard to empty information comprises:
replacing the data on the clipboard with spaces; or
deleting the data on the clipboard.

3. The method according to claim 1, wherein after copying the data on the clipboard and saving the data into the memory space of the process of the current controlled document, the method further comprises:
encrypting the data stored in the memory space; and
accordingly, before pasting the data in the memory space into the current controlled document through the paste operation, the method further comprises:
decrypting the data in the memory space.

4. The method according to claim 1, wherein the determining of that the paste operation meets the preset rights comprises:
determining that the paste operation meets the preset rights if a context of the paste operation is the process of the current controlled document.

5. The method according to claim 1, wherein the determining of that the paste operation meets the preset rights comprises:
judging whether the paste operation is allowed according to preset conditions if the context of the paste operation is a process of another controlled document other than the current controlled document, and determining that the paste operation meets the preset rights if the paste operation is allowed, or determining that the paste operation does not meet the preset rights if the paste operation is not allowed.

6. A method for controlling operations on a document, comprising:
intercepting a copy operation, copying data on a clipboard, and saving the data into a memory space of a process of a current controlled document, wherein the data on the clipboard is content in the current controlled document; and
intercepting a paste operation, and pasting the data in the memory space of the process of the current controlled document into a target controlled document according to a context of the paste operation if determining that the paste operation meets preset rights.

7. The method according to claim 6, wherein:
the determining of that the paste operation meets the preset rights comprises:
determining that the paste operation meets the preset rights if the context of the paste operation is the process of the current controlled document; and
the pasting of the data in the memory space of the process of the current controlled document into the target controlled document comprises:
pasting the data in the memory space of the process of the current controlled document into the current controlled document.

8. The method according to claim 6, wherein:
the determining of that the paste operation meets the preset rights comprises:
determining that the paste operation meets the preset rights if the context of the paste operation is a process of the another controlled document other than the current controlled document and if the paste operation is allowed according to preset conditions, wherein the preset conditions indicate whether the another controlled document is entitled to accept content copied and pasted from the current controlled document; and
the pasting of the data in the memory space of the process of the current controlled document into the target controlled document comprises:
pasting the data in the memory space of the process of the current controlled document into the another controlled document.

9. The method according to claim 6, claim 7, or claim 8, further comprising:
setting content of the clipboard to empty information if determining that the paste operation does not meet the preset rights.

10. The method according to claim 6, wherein after copying the data on the clipboard and saving the data into the memory space of the process of the current controlled document, the method further comprises:
encrypting the data stored in the memory space; and
accordingly, before pasting the data in the memory space of the process of the current controlled document into the target controlled document, the method further comprises:
decrypting the data in the memory space.

11. A terminal device, comprising:
a copying unit, adapted to intercept a copy operation, copy data on a clipboard and save the data into a memory space of a process of a current controlled document;
a setting unit, adapted to set content of the clipboard to empty information;
a judging unit, adapted to intercept a paste operation, and judge rights for the paste operation to obtain a judgment result; and
a pasting unit, adapted to paste the data in the memory space into the current controlled document through the paste operation if the judging unit determines that the paste operation meets preset rights.

12. The terminal device according to claim 11, wherein the setting unit comprises:
a replacing subunit, adapted to replace the data on the clipboard with spaces; or
a deleting subunit, adapted to delete the data on the clipboard.

13. The terminal device according to claim 11, further comprising:
an encrypting unit, adapted to encrypt the data stored in the memory space; and
a decrypting unit, adapted to decrypt the data stored in the memory space if the judging unit determines that the paste operation meets the preset rights; and
the pasting unit is adapted to paste the decrypted data in the memory space into the current controlled document through the paste operation if the judging unit determines that the paste operation meets the preset rights.

14. The terminal device according to claim 11, wherein the judging unit comprises:
a first judging subunit, adapted to determine that the paste operation meets the preset rights if determining that a context of the paste operation is the process of the current controlled document;
a second judging subunit, adapted to determine that the paste operation does not meet the preset rights if determining that the context of the paste operation is a process of an uncontrolled document; and
a third judging subunit, adapted to judge whether the paste operation is allowed according to preset conditions if determining that the context of the paste operation is a process of another controlled document other than the current controlled document, and determine that the paste operation meets the preset rights if the paste operation is allowed, or determine that the paste operation does not meet the preset rights if the paste operation is not allowed.

15. A terminal device, comprising:
a copying unit, adapted to intercept a copy operation, copy data on a clipboard and save the data into a memory space of a process of a current controlled document, wherein the data on the clipboard is content in the current controlled document;
a judging unit, adapted to intercept a paste operation, and judge rights for the paste operation to obtain a judgment result; and
a pasting unit, adapted to: intercept a paste operation, and paste the data in the memory space of the process of the current controlled document into a target controlled document according to a context of the paste operation if the judging unit determines that the paste operation meets preset rights.

16. The terminal device according to claim 15, wherein the judging unit comprises:
a fourth judging subunit, adapted to judge whether the context of the paste operation is the process of the current controlled document;
a fifth judging subunit, adapted to judge whether the context of the paste operation is a process of the another controlled document other than the current controlled document if the fourth judging subunit determines that the context of the paste operation is not the process of the current controlled document;
a sixth judging subunit, adapted to judge whether the paste operation is allowed according to preset conditions if the fifth judging subunit determines that the context of the paste operation is the process of the another controlled document other than the current controlled document; and
a determining subunit, adapted to: determine that the paste operation meets the preset rights if the context of the paste operation is the process of the current controlled document or if the context of the paste operation is a process of the another controlled document which allows paste operations other than the current controlled document; and determine that the paste operation does not meet the preset rights if the context of the paste operation is neither the process of the current controlled document nor the process of the another controlled document which allows paste operations other than the current controlled document; and
the pasting unit is adapted to: paste the data in the memory space of the process of the current controlled document into the current controlled document if the determining subunit determines that the paste operation meets the preset rights and that the context of the paste operation is the process of the current controlled document; and paste the data in the memory space of the process of the current controlled document into the another controlled document if the determining subunit determines that the paste operation meets the preset rights and that the context of the paste operation is the process of the another controlled document which allows paste operations other than the current controlled document.

17. The terminal device according to claim 16, further comprising:
a setting unit, adapted to set content of the clipboard to empty information if the determining subunit determines that the paste operation does not meet the preset rights.

18. The terminal device according to claim 15, further comprising:
an encrypting unit, adapted to encrypt the data stored in the memory space; and
a decrypting unit, adapted to decrypt the data stored in the memory space if the judging unit determines that the paste operation meets the preset rights; and
the pasting unit is adapted to paste the decrypted data in the memory space into the target controlled document through the paste operation according to the context of the paste operation if the judging unit determines that the paste operation meets the preset rights.
